# EUROPÄISCHE PATENTANMELDUNG

(11) **EP 3 037 504 A1**
(43) Veröffentlichungstag der Anmeldung: **29.06.2016**
(21) Anmeldenummer: 15003421.3
(22) Anmeldetag: 01.12.2015
(51) Int. Cl.: C10L 3/00, F17D 5/02

(54) **VERFAHREN UND ODORIERUNGSMITTELSPEICHER ZUM ODORIEREN EINES NUTZGASES, INSBESONDERE ERDGAS**

(30) Priorität: 23.12.2014 DE 102014019463
(71) Anmelder: Linde Aktiengesellschaft, 80331 München (DE)
(72) Erfinder: Adler, Robert, 2201 Gerasdorf (AT); Klein, Ekkehardt, 3434 Katzelsdorf (AT); Nagl, Christoph, 2534 Alland (AT); Pollak, Andreas, 1160 Wien (AT); Muchitsch, Werner, 2344 Maria Enzersdorf (AT)

(57) **Zusammenfassung**

Die Erfindung betrifft ein Verfahren zum Odorieren eines Nutzgases (2), aufweisend die Schritte: Vorhalten eines Odorierungsmittels (4) in einem Behälter (3) eines Odorierungsmittelspeichers (1); Führen zumindest eines ersten Teilstroms des Nutzgases (2) durch den Behälter (3), wobei der erste Teilstrom einen Teil des Odorierungsmittels mitnimmt und entsprechend odoriert wird, und wobei zur Dosierung dieses Teils die Temperatur des Odorierungsmittels (4) im Behälter in einem vordefinierten Temperaturbereich gehalten wird, so dass der Dampfdruck des Odorierungsmittels (4) in einem vorbestimmten Bereich eingestellt ist. Weiterhin betrifft die Erfindung einen entsprechenden Odorierungsmittelspeicher sowie eine entsprechende Anlage zur Odorierrung eines Nutzgases.

## Beschreibung

Die Erfindung betrifft ein Verfahren zum Odorieren eines Nutzgases, sowie Odorierungsmittelspeicher zum Odorieren eines Nutzgases und eine Odorierungsanlage.

Ein Nutzgas, wie zum Beispiel Erdgas, welches gesundheitsgefährlich, entzündlich und/oder explosiv ist und dabei geruchsarm beziehungsweise geruchslos ist, muss im Bereich der Verwendung durch Menschen, zum Beispiel beim Tanken oder beim Verbrennen, mit einem Odorierungsmittel versetzt werden, so dass ein Austreten des Nutzgases mit Hilfe des Odorierungsmittels vom Menschen wahrnehmbar ist. Derzeit gibt es zwei Verfahren zum Odorieren eines Nutzgases, nämlich eine Teilstromodorierung über ein Drosselsystem und über Dosierpumpen. Diese Verfahren müssen mit relativ großen Massenströmen betrieben werden, weil eine Beimengung von Odorierungsmittel nur im ppm-Bereich (parts per million) gefordert ist. Die Mindestmenge ist dabei über Richtlinien festgelegt, wie zum Beispiel von der DVGW beziehungsweise von der ÖVGW (Deutscher beziehungsweise Österreichischer Verein des Gasfaches und des Wasserfaches) für die Gasqualität und auch die maximale Beimengung ist über die nationalen und europäischen Kraftstoffverordriung geregelt. Wird eine Dosierpumpe verwendet, ist zudem ein großer Aufwand für die Mess- und Regelungstechnik erforderlich.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die der Erfindung zugrundeliegende Aufgabe wird dadurch gelöst, dass ein Verfahren zum Odorieren eines Nutzgases durchgeführt wird, bei dem zumindest die folgenden Schritte durchgeführt werden:
a. Vorhalten eines Odorierungsmittels in einem (insbesondere geschlossenen bzw. drucktragenden) Behälter eines Odorierungsmittelspeichers;
b. Führen zumindest eines ersten Teilstroms eines Nutzgases, insbesondere Erdgas, durch den Behälter,
wobei das Odorierungsmittel temperaturkontrolliert vorgehalten wird, so dass der Dampfdruck des Odorierungsmittels in einem vorbestimmten Bereich eingestellt ist, wobei bevorzugt ein Dampfdruck in einem Bereich von 0,2 kPa bis 1,5 kPa, bevorzugt von 0,6 kPa bis 1,0 kPa, bei einer Temperatur in einem Bereich von 0 °C bis 15 °C, bevorzugt von 2 °C bis 5 °C, eingestellt ist. Als Odorierungsmittel wird bevorzugt Tetrahydrothiophen (THT) eingesetzt. Andere Odorierungsmittel können jedoch ebenfalls verwendet werden. THT weist oberhalb von 20°C einen hohen Dampfdruck auf, der bei 40°C mit 5,24kPa beispielsweise bereits einen rund 10-fachen Wert, verglichen zu 0°C mit 0,55kPa besitzt. Bei 100°C mit 54,21 kPa sogar einen rund 100-fachen Wert verglichen zu 0°C. Dies würde die Odorierung, die üblicherweise z.B. 10ppm Tetrahydrothiophen auf Methan aufweisen soll, erschweren. Es wird daher insbesondere bei der Verwendung von THT als Odorierungsmittel bevorzugt in dem oben genannten Temperatur- bzw. Dampfdruckbereichen odoriert.

Der Behälter zeichnet sich insbesondere dadurch aus, dass er nicht zur Atmosphäre hin offen ist. Hierdurch wird ein Entweichen von Odorierungsmittel verhindert. Darüber hinaus wird eine gut kontrollierbare Menge von Odorierungsmittel dampfförmig, also gasförmig, bereitgestellt, weil sich oberhalb eines gebildeten Flüssigkeitsspiegels des Odorierungsmittels eine Sättigung einstellen kann, welche einem definierten Dampfdruck entspricht. Das Odorierungsmittel ist also im eingestellten Temperaturbereich eine Flüssigkeit, wie zum Beispiel (Tetrahydrotiophen, THT), welches zu etwa 20 mg/Vₙ [Milligramm pro Normvolumen] zum Nutzgas bzw. Erdgas zugegeben werden soll. Das Normvolumen ist jenes Volumen, welches ein Gas aufweist, wenn Normbedingungen vorliegen, also ein Druck von 1013,25 hPa [Hektopascal], eine Luftfeuchte von 0 % [Prozent] und eine Temperatur von (nach DIN 1343) 273,15 K [Kelvin] beziehungsweise (nach ISO 2533) 288,15 K vorliegt. Grundsätzlich ist auch ein Feststoff-Odorierungsmittel einsetzbar, welches bekannte und (temperatur-) kontrollierbare Dampfdrücke aufweist.

Mit einem geschlossenen Behälter ist jedoch nicht gemeint, dass hier keine (verschließbaren) Einlässe oder Auslässe für zum Beispiel Prozessgase vorgesehen sind, und schließt insbesondere auch nicht aus, dass Messsonden in den Behälter einführbar sind oder angeordnet sind.

Weiterhin wird ein erster Teilstrom eines Nutzgases (oder gar ein Gesamtstrom eines Nutzgases) durch den Behälter geführt, so dass sich das Nutzgas mit dem dampfförmig vorliegenden Odorierungsmittel, entsprechend den erzeugten Partialdrücken, vermischt. Die richtige Zusammensetzung aus Odorierungsmittel und Nutzgas wird hierbei durch die indirekte Einstellung des Dampfdrucks des Odorierungsmittels eingestellt, nämlich indem das (flüssige) Odorierungsmittel temperaturkontrolliert wird. D.h., die Temperatur des Odorierungsmittels wird (insbesondere aktiv) in einem bestimmten Bereich gehalten, insbesondere konstant gehalten, z. B. durch eine Regelung oder Steuerung der Temperatur des Odorierungsmittels mittels einer Mittels zum Temperieren, insbesondere Kühlen, des Odorierungsmittels.

Das Volumen des Kontaktbereichs beziehungsweise die Länge der Durchströmungsstrecke für den ersten Teilstrom des Nutzgases, welcher durch den Behälter geleitet wird, wird derart eingestellt, dass eine zuverlässige und mengenmäßig korrekte Durchmischung erreichbar ist.

Besonders bevorzugt wird der Kontaktbereich derart ausgelegt, dass ein (nahezu) vollständiger Ausgleich der Partialdrücke stattfindet, also der Teilstrom gesättigt ist, so dass bei einem Anhalten der Anlage keine Überodorierung stattfindet. Geeignete Dampfdrücke liegen hierbei zwischen 0,2 kPa (Kilo Pascal) bis 1,5 kPa, besonders bevorzugt bei 0,6 kPa bis 1,0 kPa. Hierzu wird insbesondere im Bereich bei der Verwendung von THT eine Temperatur von 0 °C (Grad Celsius) bis 15 °C, bevorzugt 2 °C bis 5 °C, eingestellt. Somit kann über die Regelung/Steuerung der Temperatur, welche schnell und einfach erfassbar ist, der Prozess zuverlässig gesteuert werden. Für den Fall einer Odorierung von Erdgas liegt der Erdgasdruckbetriebsdruck insbesondere im Bereich von 200 bar bis 330bar.

Gemäß einer weiteren vorteilhaften Ausführungsform des Verfahrens wird das Nutzgas über zumindest eine Filterkerze durch den geschlossenen Behälter geführt, wobei die zumindest eine Filterkerze in ein Odorierungsmittelbad eingetaucht ist, und wobei das Nutzgas mittels der zumindest einen Filterkerze auch mit flüssigem Odorierungsmittel in Kontakt gebracht wird, das eine Wandung der Filterkerze benetzt.

Gemäß einer weiteren vorteilhaften Ausführungsform des Verfahrens wird der geschlossene Behälter mittels (insbesondere hydraulisch getrennter) Mantelkühlung temperiert, wobei bevorzugt zumindest eines der folgenden Kühlmittel eingesetzt wird:
- Wasser;
- ein Kältemittel bzw. eine Kältemaschine;
- flüssiger Stickstoff; und
- flüssiges Erdgas.

Mittels der hydraulischen Trennung wird das Kühlmittel nicht mit dem im Behälter enthaltenen Odorierungsmittel durchmischt. Beispielsweise weist der Behälter einen Mantel in Form einer Doppelwandung auf, welche zumindest bereichsweise von einem Kühlmittel durchströmt wird und durch eine Innenwandung von dem Odorierungsmittel innerhalb des geschlossenen Behälters getrennt ist. Es können aber auch Kühlspiralen oder andere Mittel mit vergrößerter Oberfläche vorgesehen werden. Insbesondere Stickstoff oder Erdgas sind häufig bei der Durchführung eines solchen Odorierungsverfahrens verfügbar und können so leicht zum Kühlen des Odorierungsmittels eingesetzt werden.

Gemäß einer weiteren vorteilhaften Ausführungsform des Verfahrens wird das Nutzgas bei einem Druck von über 100 bar, bevorzugt von 300 bar, zugeführt, wobei der Druck durch eine Hochdruckversorgung sichergestellt ist und die Einspeisung des Nutzgases insbesondere durch eine bevorzugt pneumatische Absperrarmatur gesteuert wird.

Bei dieser bevorzugten Ausführungsform wird ein hoher Druck, welcher für zum Beispiel eine Betankung mit Erdgas notwendig ist, im Odorierungsverfahren vorgehalten. Somit ist dieses Verfahren gut in einen kontinuierlichen Prozess einbindbar. Besonders bevorzugt ist die pneumatische Absperrarmatur als Überströmregelventil ausgebildet und/oder ein zusätzliches Überströmregelventil vorgesehen, wodurch der Druck mittels des vorgespannten Überströmregelventils einregelbar bzw. einstellbar ist. Das Überströmregelventil ist hinter einem Verdichter angeordnet. Ein Überströmventil öffnet bei Erreichen eines vorbestimmten Drucks und schließt bei Unterschreiten eines vorbestimmten Drucks. Somit bleibt der Druck (nahezu) konstant.

Gemäß einer weiteren vorteilhaften Ausführungsform des Verfahrens wird (auch) das Nutzgas temperiert. Bevorzugt werden die oben für das Odorierungsmittel bzw. THT angegebenen Temperaturbereiche auch für das Nutzgas angesetzt.

Durch eine Temperaturführung des Nutzgases wird die Temperatur des Odorierungsmittels zumindest im Kontaktbereich sicher eingestellt und erlaubt somit eine zuverlässige Durchführung der Beimengung von Odorierungsmittel in das Nutzgas. Die Temperatur wird dabei bevorzugt auf die für den jeweils erwünschten Dampfdruck erforderliche Temperatur eingestellt.

Gemäß einer weiteren vorteilhaften Ausführungsform des Verfahrens wird das Nutzgas vor dem Odorieren in zumindest zwei Teilströme zerlegt und der erste Teilstrom odoriert und der zweite Teilstrom nach dem Odorieren mit dem odorierten ersten Teilstrom zu einem Gesamtstrom vereint, wobei bevorzugt ein dritter Teilstrom vor dem Odorieren abgetrennt wird, welcher zum Einstellen eines Odorierungsmittelanteils des Gesamtstroms mit dem Gesamtstrom bedarfsgerecht gemischt wird.

Mittels der Trennung des Nutzgases in zumindest zwei Teilströme ist eine Beimengung von Odorierungsmittel in der geforderten Menge besonders einfach einstellbar. Insbesondere wird ein übermäßig odorierter erster Teilstrom mit einem nicht odorierten zweiten Teilstrom auf den geforderten Odorierungsmittelanteil gebracht. Bevorzugt ist ein dritter Teilstrom vorgesehen, der als Bypass dient, um unbehandeltes Nutzgas abziehen zu können.

Gemäß einem weiteren Aspekt der Erfindung wird ein Odorierungsmittelspeicher zum Odorieren eines Nutzgases beschrieben, welcher zumindest die folgenden Komponenten aufweist:
- einen (insbesondere geschlossenen) Behälter zur Aufnahme eines flüssigen Odorierungsmittels;
- einen Nutzgaseinlass in den geschlossenen Behälter;
- einen Nutzgasauslass aus dem geschlossenen Behälter;
- einen Nutzgaskontaktbereich zum Kontaktieren von einem Nutzgas mit einem Dampf eines Odorierungsmittels im geschlossenen Behälter, bevorzugt oberhalb eines Flüssigkeitsspiegels eines Odorierungsmittels im geschlossenen Behälter, welcher sich vor allem dadurch kennzeichnet, dass das flüssige Odorierungsmittel im geschlossenen Behälter zur Einstellung eines vorbestimmten Dampfdruckbereichs temperierbar ist, wobei bevorzugt ein Dampfdruck in einem Bereich von 0,2 kPa bis 1,5 kPa, bevorzugt von 0,6 kPa bis 1,0 kPa, bei einer Temperatur in einem Bereich von 0 °C bis 15 °C, bevorzugt von 2 °C bis 5 °C, einstellbar ist.

Der Odorierungsmittelspeicher ist bevorzugt zur Durchführung eines Verfahrens gemäß der obigen Beschreibung eingerichtet. Der Odorierungsmittelspeicher weist bevorzugt einen geschlossenen Behälter auf, in dem ein flüssiges Odorierungsmittel aufnehmbar ist. Ein solches Odorierungsmittel ist zum Beispiel THT. Der geschlossene Behälter ist hierbei von einer umgebenden Atmosphäre getrennt, weist aber Einlässe und Auslässe auf. Zum Beispiel sind ein Nutzgaseinlass und ein Nutzgasauslass vorgesehen, über die ein Nutzgas, zum Beispiel Erdgas, durch den Behälter strömen kann und mit dampfförmigen und/oder flüssigen Odorierungsmittel in Kontakt kommen kann. Somit kann sich das Nutzgas mit dem Odorierungsmittel durchmischen und in einer gewünschten Menge wieder aus dem Nutzgasauslass austreten. Der Nutzgaskontaktbereich ist dabei in einer bevorzugten Ausführungsform der Freiraum oberhalb eines Flüssigkeitsspiegels des Odorierungsmittels.

Infolge der Temperaturführung des Odorierungsmittels ist der Dampfdruck in einem engen Bereich einstellbar und vorzugsweise im Nutzgaskontaktbereich stets gesättigt. Somit ist eine sehr geringe Menge an Odorierungsmittel in das Nutzgas einbringbar, ohne dass hierzu weitere Regelungsmaßnahmen über die Temperaturführung hinaus notwendig sind. Besonders bevorzugt ist zumindest eine Leitung, bevorzugt eine Zuleitung und eine Ableitung, für ein Odorierungsmittel vorgesehen, über welche in einfacher Weise Odorierungsmittel zur Verfügung gestellt werden kann.

Gemäß einer weiteren vorteilhaften Ausführungsform des Odorierungsmittelspeichers ist zumindest eine Filterkerze vorgesehen, welche zur Beimischung von Odorierungsmittel zu einem Nutzgasstrom in das flüssige Odorierungsmittel tauchbar ist, wobei die zumindest eine Filterkerze mit dem zumindest einen Nutzgaseinlass und mit dem zumindest einen Nutzgasauslass kommunizierend verbunden ist.

Hierbei ist im Betrieb die zumindest eine Filterkerze in das Odorierungsmittelbad eingetaucht, wobei eine Wandung der Filterkerze Odorierungsmittel aufnehmen kann.

Im oder am Behälter, insbesondere in oder an der Filterkerze, kann eine Temperaturmesseinrichtung vorgesehen sein, so dass das Verfahren besonders zielgenau durchführbar ist. Insbesondere durch Regeln der Temperatur des Odorierungsmittels auf eine gewünschte Temperatur.

Die Filterkerze ist bevorzugt mit dem Nutzgaseinlass strömungstechnisch verbunden, so dass das Nutzgas in einen Innenraum der Filterkerze einströmen kann und die Filterkerze durch eine für das Nutzgas durchlässige Wandung, die den Innenraum umschließt, verlassen kann bzw. in einen außerhalb der Filterkerze gelegenen Bereich des Behälters austreten kann. Von hier wird das Nutzgas zum Nutzgasauslass geführt.

### Insbesondere verhindert die Filterkerze eine Aufwirbelung der Odorierungsflüssigkeit

Gemäß einer weiteren vorteilhaften Ausführungsform des Odorierungsmittelspeichers weist der geschlossene Behälter bzw. das Mittel zum Temperieren des Odorierungsmittels ein kühlbaren Mantel auf, in welchen ein Kühlmittel einleitbar ist.

Mit diesem Kühlmantel ist das Odorierungsmittel leicht über die gesamte Volumenerstreckung in dem geschlossenen Behälter auf eine einheitliche Temperatur führbar. Darüber hinaus wird mittels des Kühlmantels eine Abschirmung von der Umgebung erreicht. Geeignete Kühlmittel sind hierbei wie oben dargestellt: Kaltwasser, ein sonstiges Kühlmittel, flüssiges Erdgas oder flüssiger Stickstoff.

Gemäß einem weiteren Aspekt der Erfindung wird eine Odorierungsanlage zum Odorieren eines Nutzgases vorgeschlagen, aufweisend:
- einen erfindungsgemäßen Odorierungsmittelspeicher (z. B. nach der obigen Beschreibung);
- eine Produktleitung für zu odorierendes Nutzgas stromaufwärts des Odorierungsmittelspeichers;
- eine Gesamtleitung für odoriertes Nutzgas stromabwärts des Odorierungsmittelspeichers;
- eine erste Teilstromleitung , zum Führen eines zu odorierenden ersten Teilstroms des Nutzgases, welche von der Produktleitung abzweigt, wobei die erste Teilstromleitung eine Nutzgaszuleitung für ein zu odorierendes Nutzgas aufweist, welche mit dem Nutzgaseinlass in Strömungsverbindung steht, und welche eine Nutzgasableitung für ein odoriertes Nutzgas aufweist, welche mit dem Nutzgasauslass und der Gesamtleitung in Strömungsverbindung steht;
- eine zweite Teilstromleitung, zum Führen eines zweiten Teilstroms, welche von der Produktleitung und/oder von der Nutzgaszuleitung der ersten Teilstromleitung abzweigt und mit der Nutzgasableitung der ersten Teilstromleitung oder mit der Gesamtleitung in Strömungsverbindung steht.

Den Hauptbestandteil der Odorierungsanlage bildet ein erfindungsgemäßer Odorierungsmittelspeicher (z.B. gemäß der obigen Beschreibung), wobei das Nutzgas über eine Produktleitung zugeführt wird und über eine Gesamtleitung odoriert einem weiteren Prozess zur Verfügung gestellt wird. Beispielsweise ist ein Nutzgas nicht odoriert speicherbar und wird zum Zeitpunkt einer Entnahme mittels des oben beschriebenen Verfahrens odoriert.

Zur besseren Einstellbarkeit der Beimengung von Odorierungsmittel wird hier das Nutzgas auf eine erste Teilstromleitung und eine zweite Teilstromleitung aufgeteilt, wobei die zweite Teilstromleitung an dem Odorierungsmittelspeicher vorbeigeführt wird. Die erste Teilstromleitung unterteilt sich hierbei in eine Zuleitung, welche das Nutzgas von der Produktleitung in den geschlossenen Behälter des Odorierungsmittelspeichers führt. Weiterhin ist eine Ableitung vorgesehen, welche das nun odorierte Nutzgas aus dem geschlossenen Behälter des Odorierungsmittelspeichers wieder zur Gesamtleitung zurückführt und nun mit dem zweiten Teilstrom wieder vereint.

Gemäß einer weiteren vorteilhaften Ausführungsform der Odorierungsanlage ist zumindest eine dritte Teilstromleitung vorgesehen, welche stromaufwärts des Odorierungsmittelspeichers von der Produktleitung, von der zweiten Teilstromleitung oder von der Nutzgaszuleitung der ersten Teilstromleitung abzweigt und stromabwärts einer Zusammenführung der Nutzgasableitung und der zweiten Teilstromleitung mit der Gesamtleitung kommunizierend verbunden ist.

Die dritte dient als Bypass, um unbehandeltes Nutzgas abziehen zu können. Hierzu ist bevorzugt ein (z.B. pneumatisches) Regelungsventil in der dritten Teilstromleitung vorgesehen. Auch die dritte Teilstromleitung wird hierbei um den Odorierungsmittelspeicher herumgeführt und zweigt besonders bevorzugt vor einem (z.B. pneumatischen) Regelungsventil für die erste Teilstromleitung und für die zweite Teilstromleitung von der Produktleitung ab und mündet erst nach einer Zusammenführung des zweiten und ersten Teilstroms in die Gesamtleitung ein.

Die oben beschriebene Erfindung wird nachfolgend vordem betreffenden technischen Hintergrund unter Bezugnahme auf die zugehörigen Zeichnungen, welche bevorzugte Ausgestaltungen zeigen, detailliert erläutert. Es wird dargestellt in
- Fig. 1:: Ein Schaltschema einer Odorierungsanlage mit Odorierungsmittelspeicher; und
- Fig. 2:: eine Filterkerze.

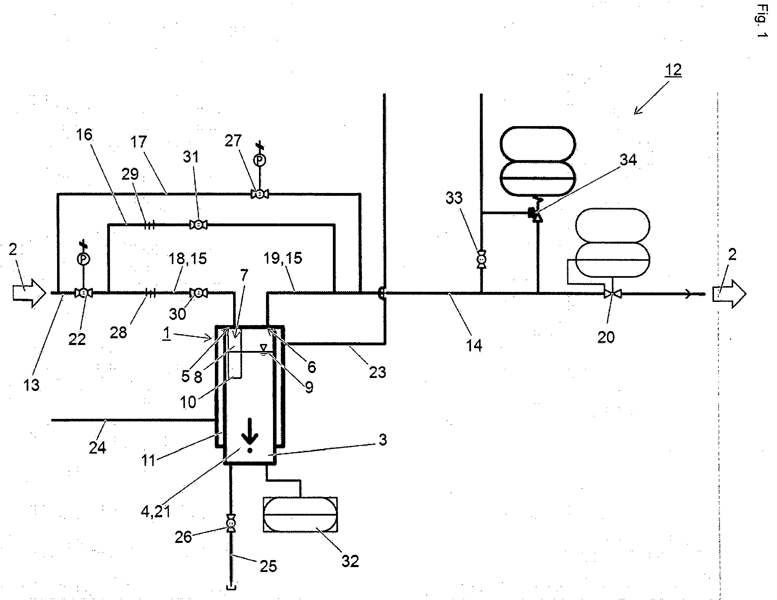

In Figur 1 ist eine Odorierungsanlage 12 mit einem Odorierungsmittelspeicher 1 gezeigt, bei dem eine erste Teilstromleitung 15, eine zweite Teilstromleitung 16 und eine dritte Teilstromleitung 17 vorgesehen sind. In einer bevorzugten Ausführungsform sind die Volumenstromverhältnisse zwischen der ersten Teilstromleitung und der zweiten Teilstromleitung fest eingestellt und Abweichungen von einem erwünschten Odorierungsmittelgehalt sind über das pneumatische Bypass-Ventil 27 in der dritten Teilstromleitung 17 ausgleichbar. Hier wird eine Ausführungsform gezeigt, bei welcher der Volumenstrom in der ersten Teilstromleitung mittels einer ersten Einstelleinrichtung 28 und der Volumenstrom in der zweiten Teilstromleitung 16 mittels eines zweiten Einstelleinrichtung 29 einstellbar ist. Weiterhin sind hier insbesondere jeweils ein zweites Ventil 30 und ein drittes Ventil 31 zum Sperren der entsprechenden Leitungen vorgesehen.

Die erste Teilstromleitung 15 schließt sich mit ihrer Zuleitung 18 an die Produktleitung 13 an, in welcher Nutzgas 2 zugeführt wird, und verbindet die Produktleitung 13 mit dem geschlossenen Behälter 3 des Odorierungsmittelspeichers 1. Die Ableitung 19 der ersten Teilstromleitung 15 wiederum verbindet den geschlossenen Behälter 3 mit der Gesamtleitung 14. Die zweite Teilstromleitung 16 schließt sich hier hinter einer pneumatischen Absperrarmatur 22 in der Produktleitung 13 an die Produktleitung 13 beziehungsweise die Zuleitung 18 der ersten Teilstromleitung 15 an. Mit der Ableitung 19 der ersten Teilstromleitung 15 beziehungsweise beim Übergang zur Gesamtleitung 14 verbindet sich die zweite Teilstromleitung 16 wieder mit der ersten Teilstromleitung 15. Die dritte Teilstromleitung 17 zweigt hierbei stromauf der pneumatischen Absperrarmatur 22 von der Produktleitung 13 ab und mündet stromab der Odorierung des ersten Teilstroms in die Gesamtleitung 14 ein. In der dritten Teilstromleitung 17 ist ebenfalls ein pneumatisches Bypass-Ventil 27 vorgesehen.

Weiterhin weist der geschlossene Behälter 3 einen Kühlmantel 11 auf, über den ein Kühlmittel über die Kühlmittelzuleitung 23 zugeführt wird. Das erwärmte Kühlmittel kann über die Kühlmittelableitung 24 wieder abgeführt werden. Bei dem hier dargestellten Odorierungsmittelspeicher 1 sind zudem eine Odorierungsmittelleitung 25 mit einem ersten Ventil 26 und ein Odorierungsmittelfüllstandmesser 32 vorgesehen, mit deren Hilfe der Flüssigkeitsspiegel 9 des Odorierungsmittels 4 im geschlossenen Behälter 3 und somit die Höhe des Odorierungsmittelbads 21 konstant gehalten werden kann.

Oberhalb des Flüssigkeitsspiegels 9 ist ein Nutzgaskontaktbereich 7 gebildet, in welchem das Odorierungsmittel 4 als Dampf 8 mit einem (eingestellten) Partialdruck vorliegt. Somit kann ein Nutzgas 2, welches aus der ersten Teilstromleitung 15 über den Nutzgaseinlass 5 in den geschlossenen Behälter 3 einströmt mit dem Dampf 8 im Nutzgaskontaktbereich 7 kontaktiert werden und über den Nutzgasauslass 6 wieder in die Ableitung 19 der ersten Teilstromleitung 15 odoriert ausgelassen werden.

Bei einem bevorzugten Verfahren wird ein erster Teilstrom über die erste Teilstromleitung 15, ein zweiter Teilstrom über die zweite Teilstromleitung 16 und ein dritter Teilstrom über die dritte Teilstromleitung 17 geleitet. Der erste Teilstrom wird in dem Nutzgaskontaktbereich 7 mit dem Dampf 8 in Kontakt gebracht und somit mit diesem gemischt. Anschließend wird der erste Teilstrom wieder mit dem zweiten Teilstrom gemischt, wobei hier bevorzugt im Normalfall der erwünschte Odorierungsgehalt erreicht ist. Abweichungen vom erwünschten Odorierungsgehalt werden mit dem dritten Teilstrom ausgeglichen.

Nach der Zusammenführung der Teilströme ist ein Vordruckregler 20 in der Gesamtleitung 14 angeordnet. Weiterhin ist ein Sicherheitsventil 34 und ein viertes Ventil 33 für die Prozesssicherheit vorgesehen.

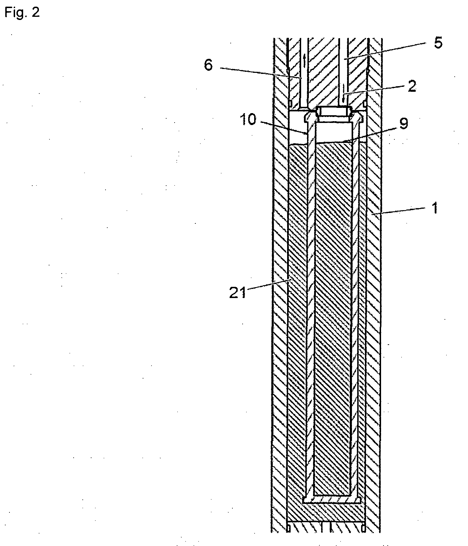

In Fig. 2 ist weiterhin eine Filterkerze 10 in einem Odorierungsmittelspeicher 1 gezeigt, welche in ein Odorierungsmittelbad 21 teilweise unterhalb eines Flüssigkeitsspiegels 9 eingetaucht ist. Ein Nutzgaseinlass 5 ist mit dem geschlossenen Innenraum der Filterkerze 10 strömungsverbunden und ein Nutzgasauslass 6 ist mit dem Odorierungsmittelspeicher 1 außerhalb der Filterkerze 10 strömungsverbunden. Das Nutzgas 2 tritt über den Nutzgaseinlass 5 ein und tritt über den Nutzgasauslass 6 odoriert wieder aus, nachdem es die den Innenraum der Filterkerze umgebende Wandung der Filterkerze 10 durchtreten hat.

Mit dem hier vorgeschlagenen Odorierungsverfahren beziehungsweise dem Odorierungsmittelspeicher und der Odorierungsanlage ist ein sehr gering dosiertes Odorieren mit geringem Regelaufwand unter Hochdruck möglich.

**Bezugszeichenliste**

| | |
|---|---|
| 1 | Odorierungsmittelspeicher |
| 2 | Nutzgas |
| 3 | geschlossener Behälter |
| 4 | Odorierungsmittel |
| 5 | Nutzgaseinlass |
| 6 | Nutzgasauslass |
| 7 | Nutzgaskontaktbereich |
| 8 | Dampf |
| 9 | Flüssigkeitsspiegel |
| 10 | Filterkerze |
| 11 | Kühlmantel |
| 12 | Odorierungsanlage |
| 13 | Produktleitung |
| 14 | Gesamtleitung |
| 15 | erste Teilstromleitung |
| 16 | zweite Teilstromleitung |
| 17 | dritte Teilstromleitung |
| 18 | Nutzgaszuleitung |
| 19 | Nutzgasableitung |
| 20 | Vordruckregler |
| 21 | Odorierungsmittelbad |
| 22 | pneumatische Absperrarmatur |
| 23 | Kühlmittelzuleitung |
| 24 | Kühlmittelableitung |
| 25 | Odorierungsmittelleitung |
| 26 | erstes Handventil |
| 27 | pneumatisches Bypass-Ventil |
| 28 | erstes Einstellelement |
| 29 | zweites Einstellelement |
| 30 | zweites Handventil |
| 31 | drittes Handventil |
| 32 | Odorierungsmittelfüllstandmesser |
| 33 | viertes Handventil |
| 34 | Sicherheitsventil |

## Patentansprüche

1. Verfahren zum Odorieren eines Nutzgases (2), aufweisend die Schritte:
a. Vorhalten eines Odorierungsmittels (4) in einem Behälter (3) eines Odorierungsmittelspeichers (1);
b. Führen zumindest eines ersten Teilstroms des Nutzgases (2) durch den Behälter (3), wobei der erste Teilstrom zumindest einen gasförmigen Anteil des Odorierungsmittels mitnimmt und entsprechend odoriert wird, und wobei zur Dosierung dieses gasförmigen Anteils die Temperatur des Odorierungsmittels (4) im Behälter in einem vordefinierten Temperaturbereich gehalten wird, so dass der Dampfdruck des Odorierungsmittels (4) im Behälter in einem vorbestimmten Bereich eingestellt ist, wobei bevorzugt der Dampfdruck in einem Bereich von 0,2 kPa bis 1,5 kPa, bevorzugt in einem Bereich von 0,6 kPa bis 1,0 kPa, bei einer Temperatur in einem Bereich von 0 °C bis 15 °C, bevorzugt von 2 °C bis 5 °C, eingestellt wird.

2. Verfahren nach Anspruch 1, **dadurch gekennzeichnet, dass** das Nutzgas (2) des ersten Teilstroms zur Reduktion von Aufwirbelungen des Odorierungsmittels über eine Filterkerze (10) in den Behälter (3) geführt wird, wobei die zumindest eine Filterkerze (10) in ein Odorierungsmittelbad (21) eingetaucht ist, das das Odorierungsmittel im Behälter (3) ausbildet, und wobei insbesondere eine Wandung der Filterkerze Odorierungsmittel aufnimmt, so dass dieses durch das Nutzgas beim Diffundieren durch die Wandung kontaktiert wird.

3. Verfahren nach Anspruch 1 oder 2, **dadurch gekennzeichnet, dass** der Behälter (3) einen umlaufenden Mantel aufweist, der zum Halten der Temperatur des Odorierungsmittel in dem vorbestimmten Bereich temperiert wird, insbesondere gekühlt wird, wobei bevorzugt zum Temperieren zumindest eines der folgenden Mittel eingesetzt wird:
- Wasser;
- eine Kältemaschine;
- flüssiger Stickstoff; und
- flüssiges Erdgas.

4. Verfahren nach einem der vorhergehenden Ansprüche, **dadurch gekennzeichnet, dass** das Nutzgas (2) bei einem Druck von über 100 bar, bevorzugt von 300 bar, zugeführt wird, wobei der Druck bevorzugt mittels einer vorgespannten pneumatischen Absperrarmatur (22) sichergestellt wird.

5. Verfahren nach einem der vorhergehenden Ansprüche, **dadurch gekennzeichnet, dass** das Nutzgas (2) temperiert wird, insbesondere stromauf der Odorierung des ersten Teilstroms

6. Verfahren nach einem der vorhergehenden Ansprüche, **dadurch gekennzeichnet, dass** das Nutzgas (2) vor dem Odorieren des ersten Teilstroms in den ersten Teilstrom sowie einen zweiten Teilstrom zerlegt wird, wobei der zweite Teilstrom nach dem Odorieren des ersten Teilstroms mit dem odorierten ersten Teilstrom zu einem Gesamtstrom gemischt wird, und wobei bevorzugt ein dritter Teilstrom vor dem Odorieren vom Nutzgas (2) abgetrennt wird, welcher zum Einstellen eines Odorierungsmittelanteils des Gesamtstroms mit dem Gesamtstrom vermischt wird.

7. Odorierungsmittelspeicher (1) zum Odorieren eines Nutzgases (2), aufweisend zumindest die folgenden Komponenten:
- einen Behälter (3) zur Aufnahme eines flüssigen Odorierungsmittels (4);
- einen Nutzgaseinlass (5) in den Behälter (3);
- einen Nutzgasauslass (6) aus dem Behälter (3);
- einen Nutzgaskontaktbereich (7) im Behälter zum Kontaktieren eines Nutzgases (2) mit einem Dampf (8) eines im Behälter befindlichen Odorierungsmittels (4), bevorzugt oberhalb eines Flüssigkeitsspiegels (9) des Odorierungsmittels (4) im Behälter (3),
**dadurch gekennzeichnet, dass**
ein Mittel zur Temperierung der Temperatur eines im Behälter befindlichen Odorierungsmittels vorgesehen ist, so dass ein vorbestimmter Dampfdruck des Odorierungsmittels im Behälter einstellbar ist, wobei bevorzugt ein Dampfdruck in einem Bereich von 0,2 kPa bis 1,5 kPa, bevorzugt in einem Bereich von 0,6 kPa bis 1,0 kPa, bei einer Temperatur in einem Bereich von 0 °C bis 15 °C, bevorzugt in einem Bereich von 2 °C bis 5 °C, einstellbar ist.

8. Odorierungsmittelspeicher (1) nach Anspruch 7, **dadurch gekennzeichnet, dass** eine Filterkerze (10) vorgesehen ist, welche zum Unterdrücken von Aufwirbelungen des Odorierungsmittels (4) im Behälter dazu eingerichtet und vorgesehen ist, abschnittsweise in dem flüssigen Odorierungsmittel (4) angeordnet zu sein, wobei die Filterkerze (10) mit dem Nutzgaseinlass (5) in Strömungsverbindung steht, so dass Nutzgas in einen von einer Wandung der Filterkerze umgebenen Innenraum der Filterkerze einleitbar sowie über die Wandung der Filterkerze zum Nutzgasauslass führbar ist.

9. Odorierungsmittelspeicher (1) nach Anspruch 7 oder 8, **dadurch gekennzeichnet, dass** das Mittel zur Temperierung einen Mantel (11) des Behälters aufweist, in welchen zur Temperierung des Odorierungsmittels ein Kühlmittel einleitbar ist.

10. Odorierungsanlage (12) zum Odorieren eines Nutzgases (2), **dadurch gekennzeichnet, dass** zumindest die folgenden Komponenten vorgesehen sind:
- einen Odorierungsmittelspeicher (1) nach einem der Ansprüche 7 bis 9;
- eine Produktleitung (13) für zu odorierendes Nutzgas (2) stromaufwärts des Odorierungsmittelspeichers (1);
- eine Gesamtleitung (14) für odoriertes Nutzgas stromabwärts des Odorierungsmittelspeichers (1);
- eine erste Teilstromleitung (15), zum Führen eines zu odorierenden ersten Teilstroms, welche von der Produktleitung (13) abzweigt, wobei die erste Teilstromleitung (15) eine Nutzgaszuleitung (18) für ein zu odorierendes Nutzgas (2) aufweist, welche mit dem Nutzgaseinlass (5) in Strömungsverbindung steht, und welche eine Nutzgasableitung (19) für ein odoriertes Nutzgas (2) aufweist, welche mit dem Nutzgasauslass (6) und der Gesamtleitung (14) in Strömungsverbindung steht;
- eine zweite Teilstromleitung (16), zum Führen eines zweiten Teilstroms, welche von der Produktleitung (13) und/oder von der Nutzgaszuleitung (18) der ersten Teilstromleitung (15) abzweigt und mit der Nutzgasableitung (19) der ersten Teilstromleitung (15) oder mit der Gesamtleitung (14) in Strömungsverbindung steht.

11. Odorierungsanlage (12) nach Anspruch 10, **dadurch gekennzeichnet, dass** zumindest eine dritte Teilstromleitung (17) vorgesehen ist, welche stromaufwärts des Odorierungsmittelspeichers (1) von der Produktleitung (13), von der zweiten Teilstromleitung (16) oder von der Nutzgaszuleitung (18) der ersten Teilstromleitung (15) abzweigt und stromabwärts einer Zusammenführung der Nutzgasableitung (19) und der zweiten Teilstromleitung (16) mit der Gesamtleitung (14) in Strömungsverbindung steht.
